# EUROPEAN PATENT SPECIFICATION

(11) **EP 2 848 345 B1**
(45) Date of publication and mention of the grant of the patent: **14.11.2018**
(21) Application number: 14774750.5
(22) Date of filing: 12.03.2014
(51) Int. Cl.: B23D 55/06

(54) **BAND SAW MACHINE**
BANDSÄGEMASCHINE
SCIE A RUBAN

(30) Priority: 26.03.2013 JP 2013063425
(43) Date of publication of application: 18.03.2015
(73) Proprietor: OI Seisakusho Co. Ltd., Shizuoka 427-0103 (JP)
(72) Inventor: TANAKA, Susumu, Shimada-shi Shizuoka 427-0103 (JP); ISHIDA, Tadao, Shimada-shi Shizuoka 427-0018 (JP)
(74) Representative: Klunker IP Patentanwälte PartG mbB
(86) International application number: PCT/JP2014/056495
(87) International publication number: WO 2014/156650

(56) References cited:
- EP-A1- 0 064 467
- FR-A- 1 056 704
- JP-A- S4 922 699
- JP-A- S61 152 318
- JP-U- S56 137 916
- JP-U- S63 201 017
- US-A- 1 711 374
- US-A- 4 785 522
- US-A- 4 878 411

## Description

### Technical Field

The present invention relates to a band saw machine according to the preamble of claim 1.

### Background Art

US 1,711,374 teaches a band saw provided with a pulley having its peripheral surface convexed radially outward from its front edge.

EP 0 064 467 A1 teaches a band saw machine according to the preamble of claim 1 and comprising a band saw and a pair of saw wheels.

A saw wheel and a band saw wound around the saw wheel, which are provided in a band saw machine and the like, are known. Generally, a pair of the saw wheels is disposed vertically spaced apart, and each of the saw wheels includes a rim portion at an outer periphery thereof and rotates around a rotary shaft. The band saw includes a teeth edge portion in which a plurality of saw teeth lays side-by-side in a circumferential direction, and a back edge portion disposed on an opposite side of the teeth edge portion interposing the rotary shaft. A saw wheel and a band saw wound around the saw wheel, which are provided in a band saw machine and the like, are known. Generally, a pair of the saw wheels is disposed vertically spaced apart, and each of the saw wheels includes a rim portion at an outer periphery thereof and rotates around a rotary shaft. The band saw includes a teeth edge portion in which a plurality of saw teeth lays side-by-side in a circumferential direction, and a back edge portion disposed on an opposite side of the teeth edge portion interposing the rotary shaft. The band saw is wounded around the saw wheel in a state where the teeth edge portion is projected in an axial direction of the
rotary shaft from an edge provided at an end portion on one side of the rim portion of the saw wheel and the back edge portion is positioned at slightly inner side of an edge on the other side of the rim portion. In the following, the axial direction of the rotary shaft of the saw wheel may be simply referred to as axial direction.

The band saw wound around the saw wheel is pulled by enlarging a space between the saw wheels to be tensioned in the circumferential direction. Therefore, tensile force is generated to pull the band saw wound around the saw wheel in the circumferential direction. Further, generally the band saw is obtained by cutting both side edges of a material metal plate straight to form a saw base material, and then executing toothing after jointing the saw base material endlessly. In the toothing, mainly tensioning processing and back crown processing are important works.

The tensioning processing is processing whereby a center portion of the band saw in a width direction is extended by a mill roll. In the case where the band saw is wound around the saw wheel without tensioning processing, both end portions of the band saw in the axial direction are curved in a direction away from the rim portion of the saw wheel. Due to this, contact pressure between the band saw and the edge of the saw wheel is weakened and further tensile force of the band saw at a portion contacting the edge of the saw wheel is weakened even though the band saw is tensioned in this state. As a result, the tensile force of the teeth edge portion projected from the edge of the saw wheel is weakened, and the teeth edge portion may meander and saw deviation may tend to occur. Due to this, the band saw is curved by the tensioning processing, and the both end portions of the band saw in the axial direction are made to face the rotary shaft side of the saw wheel while the center portion of the band saw in the axial direction is becoming away from the rim portion of the saw wheel in a state where the band saw is wound around the saw wheel. This strengthened the contact pressure between the band saw and the edge of the saw wheel. As a result, the tensile force of the band saw is strengthened at the portion contacting the edge of the saw wheel, thereby strengthening the tensile force of the teeth edge portion, and hardly causing saw deviation.

The back crown processing is processing whereby a portion on the back edge portion side of the band saw is milled to be more extended than the portion on the teeth edge portion side. In the case of cutting lumber or the like by using the band saw, frictional heat is generated at the teeth edge portion and vicinity thereof, and circumferential lengths of the teeth edge portion and the vicinity thereof are extended in the circumferential direction. When the teeth edge portion and the vicinity thereof are extended in the circumferential direction, the contact pressure between the band saw and the edge of the saw wheel is weakened and the tensile force of the band saw at the portion contacting the edge of the saw wheel is also weakened. As a result, the tensile force of the teeth edge portion projected from the edge of the saw wheel is weakened, and the teeth edge portion may meander and saw deviation may tend to occur. Due to this, even in the case where the frictional heat is generated and the teeth edge portion and the vicinity thereof is extended, the back crown processing is applied such that the contact pressure between the band saw and the edge of the saw wheel is sufficiently secured. More specifically, a difference is made between the circumferential length of the teeth edge portion and the circumferential length of the back edge portion by milling the back edge portion side to become more extended than the teeth edge portion and the vicinity thereof, thereby adjusting an amount of back crown of the band saw to an appropriate amount. This secures the sufficient contact pressure between the band saw and the edge of the saw wheel even when the teeth edge portion and the vicinity thereof are extended by the frictional heat. Accordingly, the tensile force of the band saw at the portion contacting the edge of the saw wheel is secured. As a result, the tensile force of the teeth edge portion is secured, and saw deviation may hardly occur.

Here, the tensioning processing and the back crown processing are works requiring high skill and experience, and therefore, the applicant of the present application proposes a band saw recited in Patent Literature 1.

According to the band saw recited in Patent Literature 1, an arc shape of a teeth edge portion and an arc shape of a back edge portion are obtained based on an appropriate amount of back crown, and saw base material obtained by cutting both side edges of a material metal plate into the obtained arc shapes is used. According to the band saw recited in JP 2010-167552A, the band saw having the appropriate amount of back crown can be obtained by jointing both end portions of saw base material cut into the mentioned shapes, and therefore, the back crown processing requiring high skill and experience can be omitted.

### Citation List

### Patent Literature

Patent Literature 1: JP 2010-167552 A

### Summary of Invention

### Technical Problem

However, according to the band saw recited in JP 2010-167552 A, the back crown processing can be omitted but the tensioning processing may be necessary for preventing saw deviation from occurring. Accordingly, desired is a technology whereby such saw deviation does not occur even without necessity of applying the tensioning processing.

In the view of the above-described situations, the present invention is directed to providing a saw wheel and a saw wheel unit so improved that saw deviation does not occur even without necessity of applying the tensioning processing.

### Solution to Problem

According to the invention, a band saw defined by the features of claim 1 is provided. Preferred embodiments are defined by the features of claims 2 and 3. According to an aspect, contact pressure between the band saw and the edge is strengthened when the band saw is tensioned. This also strengthens tensile force of the band saw at a portion contacting the edge. As a result, tensile force at the teeth edge portion projected from the edge is also strengthened. Due to this, when the band saw is wound around the saw wheel without applying the tensioning processing, the tensile force at the teeth edge portion is sufficiently secured and saw deviation can be prevented from occurring even though a portion of the band saw on the teeth edge portion side is curved in a direction away from the rim portion.

According to another aspect, the band saw wound around the saw wheel also contacts the contact surface, and therefore, the contact pressure between the edge and the band saw is prevented from being excessively strengthened and the tensile force of the band saw at the portion contacting the edge is prevented from being excessively strengthened. As a result, a blade bottom is unlikely to be cracked due to the excessive tensile force at the teeth edge portion.

According to a first alternative of the present invention, the rim portion includes a first groove provided at an end portion on the one side and extending in a circumferential direction,
the non-contact area and the contact surface are disposed at predetermined positions of the first groove, and
the first groove has a width which is 14 times or more and 23 times or less of a thickness of the band saw, and a depth which is 3/1000 or more and 20/1000 or less of the thickness of the band saw.

According to a second alternative of the present invention, the rim portion includes a notch formed by cutting out an end portion on the one side in a circumferential direction,
the non-contact area and the contact surface are provided at predetermined positions of the notch, and
the notch has a length which is 14 times or more and 23 times or less of a thickness of the band saw in the axial direction, and a depth which is 3/1000 or more and 20/1000 or less of the thickness of the band saw.

With this configuration, tensile force of the band saw at the portion contacting the edge becomes appropriate, thereby achieving to make tensile force at the teeth edge portion appropriate. This can further prevent saw deviation and crack of the blade bottom of the band saw from occurring.

Here, in the case where the band saw has the thickness of approximately 1.20 mm, the first groove may have a width which is 17 mm or more and 27 mm or less, and a depth which is 0.01 mm or more and 0.02 mm or less. Also, in the case where the band saw has the thickness of approximately 1.20 mm, the notch may have the width which is 17 mm or more and 27 mm or less, and the depth which is 0.01 mm or more and 0.02 mm or less.

Further, according to an embodiment, the supporting surface may include a plurality of second grooves arranged at intervals in the axial direction and extending in the circumferential direction.

Since the second grooves are provided, the end portion on the one side of the band saw in the axial direction is easily curved so as to face the rotary shaft side. Therefore, even though the tensioning processing is not applied to the band saw, the portion of the band saw on the teeth edge portion side can be prevented from being curved in the direction away from the rim portion, and the contact pressure between the band saw and the edge is strengthened. This strengthens tensile force of the band saw at a portion contacting the edge. As a result, tensile force at the teeth edge portion projected from the edge is also strengthened. Therefore, saw deviation can be more hardly caused even when the tensioning processing is not applied to the band saw.

Not according to the invention, the second groove may have a depth which is 3/1000 or more and 20/1000 or less of a thickness of the band saw, and a width which is 150 times or more and 250 times or less of the depth thereof.

With this configuration, the tensile force of the band saw at the portion contacting the edge becomes appropriate, thereby making the tensile force at the saw teeth appropriate. This can further prevent saw deviation from occurring.

Here, not according to the invention, a total length of the widths of the plurality of second grooves may be 5/100 or more and 20/100 or less of a length of the supporting surface in the axial direction. Further, in the case where the band saw has the thickness of approximately 1.20 mm, the second groove may have the width which is 2.5 mm or more and 3.5 mm or less, and the depth which is 0.01 mm or more and 0.02 mm or less.

According to the saw wheel unit of the present invention, the band saw does not contact the non-contact area, and therefore, when the band saw is tensioned, the contact pressure between the band saw and the edge is strengthened. This also strengthens tensile force of the band saw at a portion contacting the edge. As a result, tensile force at the teeth edge portion projected from the edge is also strengthened. Due to this, when the band saw is wound around the saw wheel without applying tensioning processing, the tensile force at the teeth edge portion is sufficiently secured and saw deviation can be prevented from occurring even though a portion of the band saw on the teeth edge portion side is curved in a direction away from the rim portion.

### Advantageous Effects of Invention

According to the present invention, it is possible to provide the saw wheel and saw wheel unit so improved that saw deviation hardly occur even without applying the tensioning processing.

### Brief Description of Drawings

Fig. 1 is a conceptual diagram illustrating a band saw machine including a saw wheel unit according to the present invention.
Fig. 2(a) is a conceptual diagram illustrating a saw wheel unit of the band saw machine illustrated in Fig. 1, and Fig. 2(b) is a conceptual diagram illustrating the saw wheel unit viewed from the left side.
Fig. 3(a) is a schematic cross-sectional diagram of the saw wheel unit taken along a line A - A illustrated in Fig. 2(a), Fig. 3(b) is an enlarged schematic diagram illustrating a portion B illustrated in Fig. 3(a), and Fig. 3(c) is an enlarged schematic diagram of a portion C illustrated in Fig. 3(a).
Fig. 4(a) is a schematic diagram illustrating a portion corresponding to Fig. 3(b) of the saw wheel unit according to a first modified example, and Fig. 4(b) is a schematic diagram illustrating a portion corresponding to Fig. 3(b) of the saw wheel unit according to a second modified example.
Fig. 5 (a) is a schematic diagram illustrating a mode corresponding to Fig. 2(b) of the saw wheel unit according to a third modified example, and Fig. 5(b) is a schematic diagram illustrating a portion corresponding to Fig. 3(a) of the saw wheel unit according to the third modified example.

### Description of Embodiment

An embodiment according to the present invention will be described below with reference to the drawings.

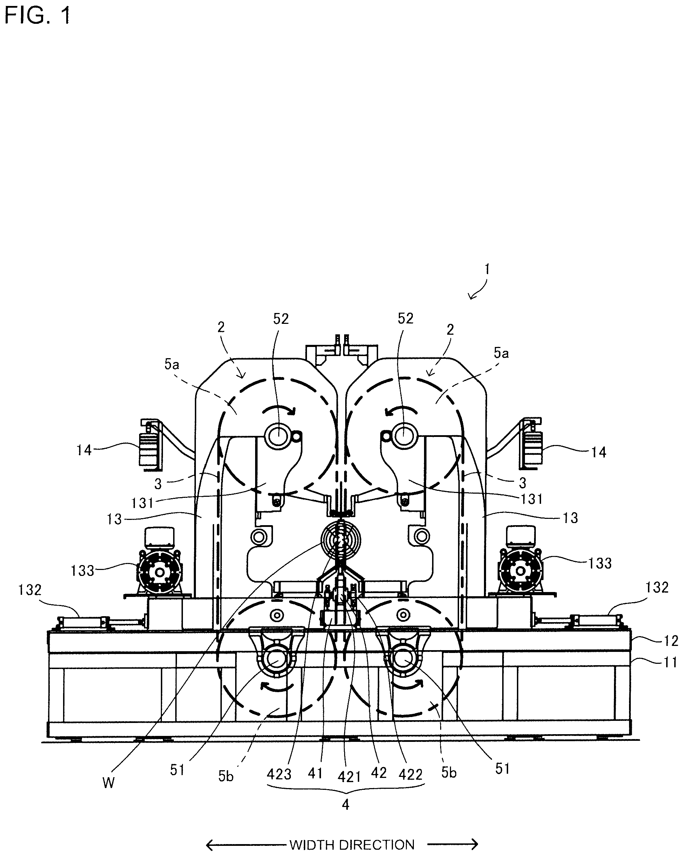

Fig. 1 is a conceptual diagram illustrating a band saw machine to the present invention. Hereinafter, the horizontal direction in Fig. 1 may be referred to as width direction in the description using Fig. 1.

As illustrated in Fig. 1, a band saw machine 1 includes a supporting base 11, a rail member 12 disposed on the supporting base 11 and extending in the width direction, a base body 13 disposed on the rail member 12, a saw wheel unit 2 supported at the base body 13, and a carriage unit 4. Further, the base body 13 includes a cylinder 132 and a motor 133. The saw wheel unit 2 includes a pair of saw wheels 5a, 5b disposed vertically spaced apart, and a band saw 3 wound around the pair of the saw wheels 5a, 5b. In Fig. 1, the saw wheel unit 2 is indicated by a dashed-dotted line. In the following, the saw wheel disposed on an upper side may be referred to as upper saw wheel 5a, and the saw wheel 5b disposed on a lower side may be referred to as lower saw wheel 5b, and both the upper saw wheel 5a and the lower saw wheel 5b may be collectively referred to as saw wheels 5. Note that the band saw machine 1 according to the present embodiment is a so-called twin type where two wheel units 2 are arranged next to each other in the width direction.

A drive shaft 51 extending in a direction orthogonal to the drawing paper is unrotatably fixed at a center portion of the lower saw wheel 5b. Drive force of the motor 133 is transmitted to the drive shaft 51, and the drive shaft 51 is rotated by the motor 133, thereby also rotating the lower saw wheel 5b. Additionally, a fixed shaft 52 extending in the direction orthogonal to the drawing paper is passed through a center portion of the upper saw wheel 5a. These drive shaft 51 and fixed shaft 52 correspond to the rotary shafts referred to in the present invention, and the direction in which these drive shaft 51 and fixed shaft 52 extend corresponds to the axial direction referred to in the present invention. The fixed shaft 52 is supported by a position adjuster 131 provided at the base body 13. The position adjuster 131 is movable in the vertical direction, and a position of the upper saw wheel 5a is also moved in the vertical direction by vertically moving the position adjuster 131, and the space between the upper saw wheel 5a and the lower saw wheel 5b can be adjusted. Additionally, a weight 14 is attached to the fixed shaft 52. The weight 14 is configured to add upward force to the fixed shaft 52 by the principle of leverage. Predetermined tensile force is added to the band saws 3 wound around the upper saw wheel 5a and the lower saw wheel 5b by the force added from the weight 14 and by adjusting the space between the upper saw wheel 5a and the lower saw wheel 5b by means of the position adjuster 131. In the saw wheel unit 2 illustrated on the left side of Fig. 1, the lower saw wheel 5b which the drive force of the motor 133 is transmitted to is rotated clockwise as indicated by arrows, thereby causing the band saw 3 to travel clockwise, and due to the travel of the band saw 3, the upper saw wheel 5a is rotated clockwise as indicated by the arrows. On the other hand, in the saw wheel unit 2 illustrated on the right side in Fig. 1, the lower saw wheel 5b which the drive force of the motor 133 is transmitted to is rotated anti-clockwise as indicated by the arrows, thereby causing the band saw 3 to travel anti-clockwise, and due to the travel of the band saw 3, the upper saw wheel 5a is also rotated anti-clockwise as illustrated by the arrows. In the following, a travel speed of the band saw is referred to as saw rim speed.

The base body 13 is slidable on the rail member 12 in the width direction. The cylinder 132 is disposed on the outer side of each of a pair of the base bodies 13, 13 in the width direction, and each of the pair of the base bodies 13, 13 slides in the width direction by driving the cylinder 132. When the base body 13 slides, the saw wheel unit 2 also slides in the width direction.

The carriage unit 4 includes a carriage rail member 41 extending in a direction orthogonal to the drawing paper and a carriage 42 that travels on the carriage rail member 41, and is disposed between the pair of base bodies 13, 13. The carriage 42 includes a carriage main body 421 extending in the direction orthogonal to the drawing paper, a pair of wheels 422, 422 provided respectively on both sides of the carriage main body 421 in the width direction, and a clamp 423 projected upward from the carriage main body 421. A plurality of the pair of wheels 422, 422 is provided spaced apart in the extending direction of the carriage main body 421. A pair of the clamps 423 is disposed at the carriage main body 421, spaced apart in the extending direction of the carriage main body 421. The space between the pair of clamps 423, 423 can be freely adjusted, and lumber W is clamped by the pair of clamps 423, 423. Further, the pair of clamps 423, 423 can rotate the clamped lumber w by 90 degrees around the rotary shaft extending in the direction orthogonal to the drawing paper. The carriage 42 has the wheel 422 engaged with the carriage rail member 41, and can travel along the carriage rail member 41 by using a driving unit not illustrated. In the following, the speed at which the carriage 42 travels is referred to as carriage speed.

Next, an exemplary mode of sawing up the lumber W by using the band saw machine 1 according to the present embodiment will be described. The band saw 3 is preliminarily wound around the upper saw wheel 5a and the lower saw wheel 5b, and for example, approximately 4 tons of tensile force is applied to the band saw 3 by adjusting the force applied to the fixed shaft 52 from the weight 14 and by adjusting the height of the fixed shaft 52 by use of the position adjuster 131.

First, the lumber W which is raw wood is conveyed to the carriage 42 by a conveying unit not illustrated, and both end portions of the lumber W in the longitudinal direction are clamped by the pair of clamps 423, 423 of the carriage 42. The carriage 42 is placed at an initial position which is a side deeper than the band saw 3 in the drawing paper. Next, the motor 133 is driven, thereby causing the band saw 3 to travel clockwise at the saw wheel unit 2 on the left side illustrated in Fig. 1, and causing the band saw 3 to travel anti-clockwise at the saw wheel unit 2 on the right side illustrated in Fig. 1. The saw rim speed of the band saw 3 is set to, for example, approximately 2500 m/min or more and 4800 m/min or less. The space between the right and left band saws 3, 3 is adjusted by driving the cylinder 132 and sliding the base body 13 in the width direction in accordance with a dimension of a target rectangular lumber and the like. In this state, the carriage 42 is made to travel toward the band saws 3, 3, namely, to the front side of the drawing paper, thereby causing the lumber W passing the band saws 3, 3. In this manner, the raw wood, namely, the lumber W is cut into a so-called lumber having a cross-sectional shape of a barrel when viewed from the side. Note that the carriage speed of the carriage 42 is set to, for example, approximately 40 m/min or more and 85 m/min or less. Subsequently, the cylinder 132 is driven to slightly widen the space between the pair of band saws 3, 3, and the carriage 42 is returned to the initial position. After the carriage 42 returned to the initial position, the lumber W having a cross-sectional shape of a barrel when viewed from the side being clamped by the pair of clamps 423 is rotated by 90 degrees around the rotary shaft extending in the direction orthogonal to the drawing paper, and also the cylinder 132 is driven such that the space between the right and left band saws 3, 3 becomes the preset space. With this state, the carriage 42 is again made to travel toward the band saws 3, 3 at the predetermined carriage speed, and the lumber W is made to pass the band saws 3, 3, thereby cutting the lumber W having a cross-sectional shape of a barrel when viewed from the side into the rectangular lumber. Subsequently, the cylinder 132 is driven to slightly widen the space between the pair of band saws 3, and the carriage 42 is returned to the initial position. Next, the lumber W is detached from the clamps 423, and then a different lumber W which is the raw wood is set by the clamps 423 to be sawn up.

The saw wheel unit 2 will be described in detail.

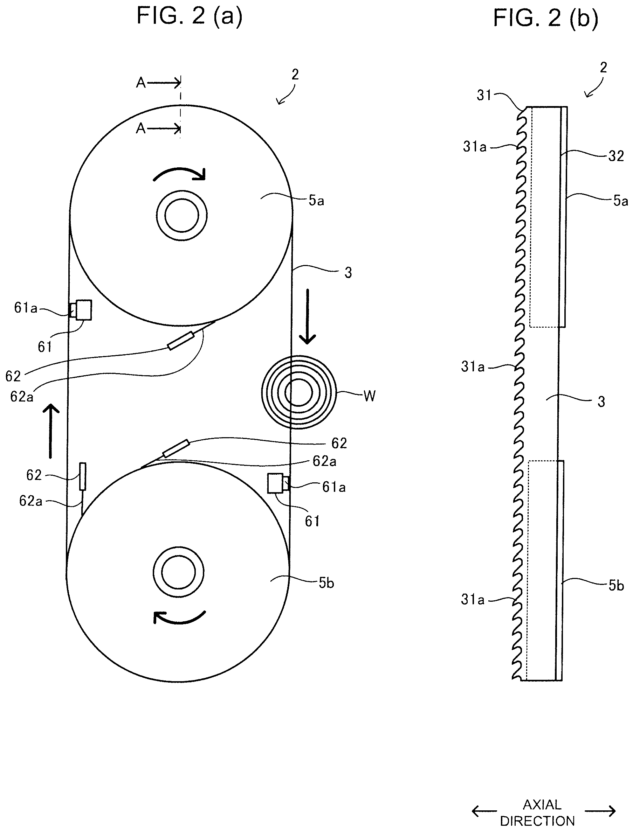

Fig. 2(a) is a conceptual diagram illustrating the saw wheel unit of the band saw machine illustrated in Fig. 1, and Fig. 2(b) is a conceptual diagram illustrating the saw wheel unit illustrated in Fig. 2(a) viewed from the left side. In Fig. 2(a), the direction orthogonal to the drawing paper is the axial direction, and in Fig. 2(b), the horizontal direction is the axial direction. Note that the configurations of the pair of saw wheel units 2 illustrated in Fig. 1 are identical, and hereinafter, description will be given for the left-side saw wheel unit 2 as an example.

As illustrated in Fig. 2(b), the band saw 3 includes the teeth edge portion 31 provided along an edge on one side (left side in the drawing) in the axial direction, and the back edge portion 32 which is the edge portion on the opposite side (right side in the drawing) of the teeth edge portion 31 in the axial direction. The teeth edge portion 31 is formed of a plurality of saw teeth 31a laying side-by-side in the circumferential direction. As described above, while the band saw 3 is being made to travel, the lumber W positioned on the deeper side than the band saw 3 in the drawing paper as illustrated in Fig. 2(a) is moved toward the band saw 3, thereby cutting the lumber W by the saw teeth 31a of the teeth edge portion 31 in the band saw 3. Note that a pitch between blade edges of the saw teeth 31a is set to approximately 25 mm or more and 60 mm or less at the band saw 3. The band saw 3 is wound around each of the upper saw wheel 5a and lower saw wheel 5b such that the back edge portion 32 is positioned slightly more inner side than each of the upper saw wheel 5a and the lower saw wheel 5b in the axial direction. The band saw 3 is obtained by forming the saw base material, for example, by cutting the material metal plate to have a predetermined amount of back crown by using a machining center, and then jointing the saw base material endlessly. The band saw 3 has thickness of approximately 0.8 mm or more and 2.0 mm or less, and is selected from among the thickness of 15 BWG (approx. 1.83 mm), 16 BWG (approx. 1.65 mm), 17 BWG (approx. 1.45 mm), 18 BWG (approx. 1.20 mm), 19 BWG (approx. 1.05 mm), and 20 BWG (approx. 0.89 mm) according to the standard according to BWG (Birmingham Wire Gage), for example. Further, in the band saw 3, the circumferential length of the teeth edge portion 31 is set to approximately 7597 mm which is about 3 mm shorter than the circumferential length of the back edge portion 32 in the case where the circumferential length of the back edge portion 32 is, for example, approximately 7600 mm. Neither tensioning processing nor back crown processing is applied to the band saw 3, but if necessary, at least one of the tensioning processing and the back crown processing may be applied to the band saw 3. Note that the band saw 3 may be also formed by jointing endlessly a plurality of saw base material having been cut to have a predetermined amount of back crown.

As illustrated in Fig. 2(a), the saw wheel unit 2 includes a first sawdust removing unit 61 and a second sawdust removing unit 62. The first sawdust removing unit 61 removes sawdust adhering to the band saw 3, and disposed on a route where the band saw 3 travels clockwise at a place before the band saw 3 is wound around the upper saw wheel 5a and a place before the band saw 3 is wound around the lower saw wheel 5b respectively in the drawing. The first sawdust removing unit 61 includes a removing portion 61a contacting an inner peripheral side portion of the band saw 3. The removing portion 61a is formed of felt, and saw cooling oil is supplied to the removing portion 61a from a lubricant supplying unit not illustrated. When the band saw 3 travels, the removing portion 61a contacts the inner peripheral side portion of the traveling band saw 3, thereby achieving to remove the sawdust adhering to the inner peripheral side portion of the band saw 3 before the band saw being wound around each of the upper saw wheel 5a and the lower saw wheel 5b. In this manner, when the band saw 3 is wound around each of the upper saw wheel 5a and the lower saw wheel 5b, the sawdust hardly enters between the band saw 3 and each of the upper saw wheel 5a and the lower saw wheel 5b, and prevents the band saw 3 from being deviated in the axial direction from a predetermined position. Preferably, the first sawdust removing unit 61 is disposed as immediately as possible before the band saw 3 is wound in order to prevent the sawdust from adhering to the inner peripheral side portion of the band saw 3 again before the band saw 3 being wound around each of the upper saw wheel 5a and the lower saw wheel 5b. Note that the first sawdust removing unit 61 may be disposed at the place either before the band saw 3 is wound around the upper saw wheel 5a or before the band saw 3 is wound around the lower saw wheel 5b.

The second sawdust removing unit 62 removes sawdust adhering to the upper saw wheel 5a and the lower saw wheel 5b, and is disposed at three places in total according to the present embodiment: a position below the upper saw wheel 5a, a position above the lower saw wheel 5b, and a position rather left side from the position above the lower saw wheel 5b in the drawing. Each of the second sawdust removing units 62 includes a removing plate 62a formed of copper, phenol resin, or the like, and a tip of the removing plate 62a contacts a portion in each of the rotating upper saw wheel 5a and lower saw wheel 5b where the band saw 3 is wound around. This removes the sawdust adhering to the portion in each of the rotating upper saw wheel 5a and the lower saw wheel 5b where the band saw 3 is wound around.

Next, a configuration of the saw wheel and a mode in which the band saw is wound around the saw wheel will be described in detail by exemplifying a portion of the upper saw wheel 5a around which the band saw 3 is wound as illustrated in Fig. 2.

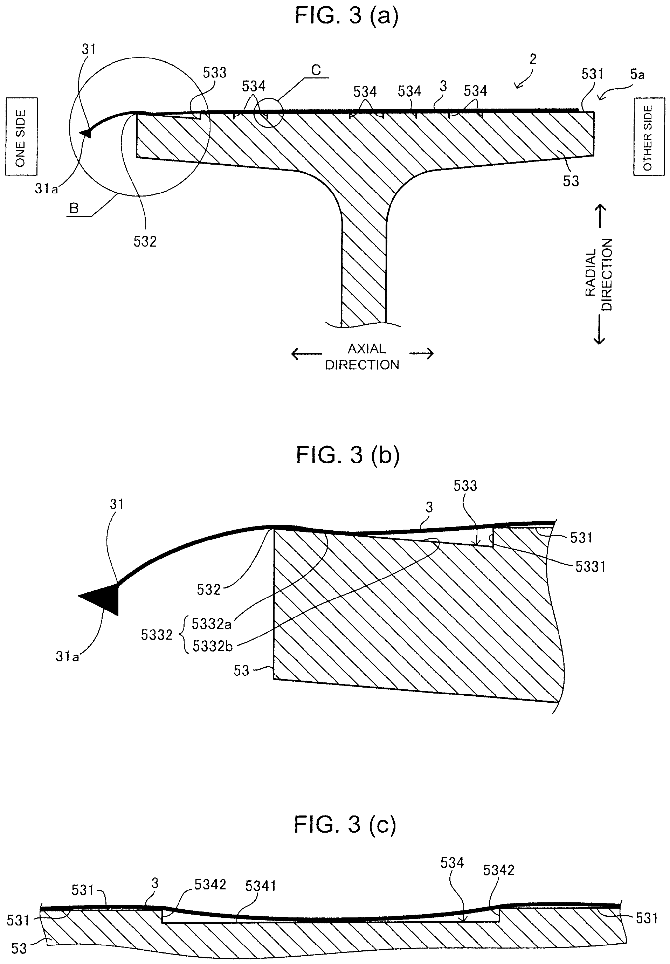

Fig. 3(a) is a diagram schematically illustrating a cross-section A-A of the saw wheel unit illustrated in Fig. 2(a). Further, Fig. 3(b) is an enlarged schematic diagram illustrating an enlarged portion B illustrated in Fig. 3(a), and Fig. 3(c) is an enlarged schematic diagram illustrating an enlarged portion C illustrated in Fig. 3(a). In Fig. 3, the horizontal direction indicates the axial direction. In the following, the left side of the axial direction in Fig. 3 may be referred to as one side, and the right side of the axial direction in Fig. 3 may be referred to as the other side. Further, the vertical direction of the saw wheel in Fig. 3 may be referred to as radial direction.

As illustrated in Fig. 3(a), the upper saw wheel 5a includes a cylindrical rim portion 53 at an outer periphery thereof. The rim portion 53 includes a supporting surface 531 constituting an own outer peripheral surface, an edge 532 provided at an end portion on the one side in the axial direction, and a first groove 533 provided between the supporting surface 531 and the edge 532. The supporting surface 531 is a circumferential surface extending in substantially parallel to the axial direction from an end portion of the other side in the axial direction to the first groove 533 of the rim portion 53. Further, the supporting surface 531 includes a plurality of second grooves 534 extending in the circumferential direction. The plurality of second grooves 534 is provided at intervals in the axial direction of the supporting surface 531. According to the present embodiment, two second grooves 534 are provided at a portion close to the one side of the supporting surface 531, and five second grooves 534 are provided in a range from vicinity of a center portion in the axial direction to the other side of the supporting surface 531. Note that the positions of the second grooves 534 are not limited thereto and may be provided only at the portion close to the one side of the supporting surface 531, or the plurality of second grooves 534 may be provided at the portion close to the one side of the supporting surface 531 in a concentrated manner, for example.

The edge 532 is provided in an entire circumference of the rim portion 53, and the position in the radial direction is substantially same as the supporting surface 531. The first grooves 533 extend in the circumferential direction to the entire circumference of the rim portion 53. As illustrated in Fig. 3(b), the first groove 533 includes a wall portion 5331 and a slope 5332. The wall portion 5331 extends to the rotary shaft of the upper saw wheel 5a in the radial direction from the end portion on the one side of the supporting surface 531 in the axial direction. Note that the wall portion 5331 may be inclined in the radial direction. The slope 5332 extends to the edge 532 from a bottom-side end portion of the wall portion 5331, and is inclined in the direction away from the rotary shaft of the upper saw wheel 5a as approaching to the edge 532. A connecting portion between the wall portion 5331 and the slope 5332 may be arc-shaped. According to the present embodiment, a length of the wall portion 5331 in the radial direction corresponds to a depth of the first groove referred to in the present invention. In the case where the wall portion 5331 is inclined in the radial direction, the length in the radial direction from the bottom-side end portion of the wall portion 5331 to the supporting surface 531 corresponds to the depth of the first groove referred to in the present invention. Further, the length of the first groove 533 in the axial direction corresponds to a width of the first groove 533.

As illustrated in Fig. 3(b), the band saw 3 wound around the upper saw wheel 5a and applied with the predetermined tensile force contacts the edge 532, and also contacts a first portion 5332a which is the end portion on the one side of the slope 5332 in the axial direction. On the other hand, the band saw 3 does not contact a second portion 5332b located more close to the other side than the first portion 5332a of the slope 5332 in the axial direction, and also does not contact the wall portion 5331. In other words, the first portion 5332a corresponds to a contact surface referred to in the present invention, and the second portion 5332b and the wall portion 5331 correspond to non-contact areas referred to in the present invention.

According to the present embodiment, the second portion 5332b and the wall portion 5331 which are the non-contact areas are provided, and therefore, contact pressure between the band saw 3 and the edge 532 is strengthened. This strengthens tensile force of the band saw 3 at the portion contacting the edge 532. As a result, tensile force of the teeth edge portion 31 projected from the edge 532 is also strengthened. Therefore, the tensile force of the teeth edge portion 31 is secured and saw deviation can be prevented from occurring even in the case where the tensioning processing is not applied and the portion on the teeth edge portion 31 side of the band saw 3 is curved in the direction away from the rim portion 53 when the band saw 3 is wound around the upper saw wheel 5a. Further, since the band saw 3 also contacts the first portion 5332a, the contact pressure between the edge 532 and the band saw 3 is prevented from being excessively strengthened. Consequently, the tensile force of the band saw 3 at the portion contacting the edge 532 is prevented from being excessively strengthened. As a result, it is possible to prevent a blade bottom of the saw teeth 31a from being cracked due to the excessive tensile force at the teeth edge portion 31.

Further, the non-contact area is reduced or increased by changing the width of the first groove 533 and the depth of the first groove 533, and the area not contacting the rim portion 53 of the band saw 3 can be reduced or increased. This can adjust the contact pressure between the band saw 3 and the edge 532, and as a result, the tensile force at the teeth edge portion 31 can be adjusted. Here, according to a first alternative of the invention, the width of the first groove 533 is set to 14 times or more and 23 times or less of the thickness of the band saw 3, and the depth of the first groove 533 is set to 3/1000 or more and 20/1000 or less of the thickness of the band saw 3 in order to apply appropriate tensile force to the teeth edge portion 31.
When the width of the first groove 533 is less than 14 times of the thickness of the band saw 3 and the depth of the first groove 533 is less than 3/1000 of the thickness of the band saw 3, the tensile force at the teeth edge portion 31 may be rather insufficient. On the other hand, when the width of the first groove 533 exceeds 23 times of the thickness of the band saw 3 and the depth of the first groove 533 exceeds 20/1000 of the thickness of the band saw 3, the tensile force at the teeth edge portion 31 become rather too strong. Also, in the case where the thickness of the band saw 3 is approximately 1.20 mm, for example, preferably the width of the first groove 533 is set to 17 mm or more and 27 mm or less and the depth of the first groove 533 is set to 0.01 mm or more and 0.02 mm or less. Meanwhile, in Fig. 3 and the drawings illustrating the first groove 533 and a notch according to modified examples of the present embodiment, the depth of the first groove 533 and the notch with respect to the first groove 533 and the notch are illustrated in an enlarged manner in order that the configurations of the first groove 533 and the notch can be easily understood.

As illustrated in Fig. 3(c), the second groove 534 includes a second groove bottom portion 5341, and a pair of second groove wall portions 5342 standing at both end portions in the axial direction of the second groove bottom portion 5341. Note that a connecting portion between the second groove bottom portion 5341 and the second groove wall portion 5342 may be arc-shaped. A distance from the supporting surface 531 to the second groove bottom portion 5341 in the radial direction corresponds to the depth of the second groove referred to in the present invention, and the length of the second groove 534 in the axial direction corresponds to the width of the second groove 534.

The band saw 3 wound around the upper saw wheel 5a and applied with the predetermined tensile force falls inside the second groove 534 and slightly contacts the second groove bottom portion 5341. This weakens the tensile force of the band saw 3 at the portion falling inside the second groove 534, and the portion on the teeth edge portion 31 side of the band saw 3 is easily curved so as to face the rotary shaft side. Therefore, even when the tensioning processing has not been applied to the band saw 3, the portion on the teeth edge portion 31 side of the band saw 3 is prevented from being curved in the direction away from the rim portion 53, and the contact pressure between the band saw 3 and the edge 532 is strengthened. This strengthens the tensile force of the band saw 3 at the portion contacting the edge 532. As a result, tensile force at the teeth edge portion 31 is also strengthened. Therefore, saw deviation can be more hardly caused even when the tensioning processing is not applied to the band saw 3.

Further, a curving degree of the portion on the teeth edge portion 31 side of the band saw 3 can be adjusted so as to face the rotary shaft side by changing the width of the second groove 534 and the depth of the second groove 534. This can adjust the contact pressure between the band saw 3 and the edge 532, and as a result, the tensile force at the teeth edge portion 31 can be adjusted. Here, preferably, the depth of the second groove 534 is set to 3/1000 or more and 20/1000 or less of the thickness of the band saw 3, and the width of the second groove 534 is set to 150 times or more and 250 times or less of the depth thereof in order to apply appropriate tensile force to the teeth edge portion 31. When the depth of the second groove 534 is smaller than 3/1000 of the thickness of the band saw 3 and the width of the second groove 534 exceeds 250 times of the depth thereof, contacting force of the band saw 3 to the second groove bottom portion 5341 becomes rather too strong, and it may be difficult to prevent the band saw 3 from being curved. On the other hand, the depth of the second groove 534 exceeds 20/1000 of the thickness of the band saw 3 and the width of the second groove 534 is smaller than 150 times of the depth thereof, the band saw 3 may hardly contact the second groove bottom portion 5341. In the case where the band saw 3 does not contact the second groove bottom portion 5341, the tensile force at the portion of band saw 3 falling inside the second groove 534 is too weakened and the band saw 3 becomes unstable because the contact pressure between the band saw 3 and the supporting surface 531 is varied in an entire portion where the band saw 3 contacts the supporting surface 531. Further, in the case where the thickness of the band saw 3 is, for example, approximately 1.20 mm, preferably the depth of the second groove 534 is set to 0.01 mm or more and 0.02 mm or less and the width of the second groove 534 is set to 2.5 mm or more and 3.5 mm or less.

Additionally, the portion contacting the supporting surface 531 tends to be flat in the axial direction in the band saw 3 because of the plurality of the second grooves 534. Due to this, the contact pressure between the band saw 3 and the supporting surface 531 tends to be uniform in the entire portion where the band saw 3 contacts the supporting surface 531, and the band saw 3 can be prevented from being deviated in the axial direction at the time of cutting the lumber. Here, preferably, a total length of the respective widths of the plurality of the second grooves 534 is 5/100 or more and 20/100 or less of the length of the supporting surface 531 in the axial direction. In the case where the total length of the respective widths of the plurality of the second grooves 534 is less than 5/100 of the length of the supporting surface 531 in the axial direction, it may be difficult to prevent the band saw 3 from being curved. On the other hand, in the case where the total length of the respective widths of the plurality of the second grooves 534 exceeds 20/100 of the length of the supporting surface 531 in the axial direction, the contact pressure between the band saw 3 and the supporting surface 531 is varied and the band saw 3 may be deviated in the axial direction at the time of cutting the lumber. Note that in Fig. 3(c) also the depth of the second groove 534 with respect to the width of the second groove 534 is illustrated in an enlarged manner such that the configuration of the second groove 534 can be easily understood.

Next, modified examples of the saw wheel unit 2 illustrated in Fig. 2 and Fig. 3 will be described. In the modified examples described below, differences from the embodiment illustrated in Fig. 2 and Fig. 3 will be mainly described, and description related to components named same as the components according to the embodiment illustrated in Fig. 2 and Fig. 3 will be provided denoting the components by the same reference signs used above, and repetition of the same description may be omitted.

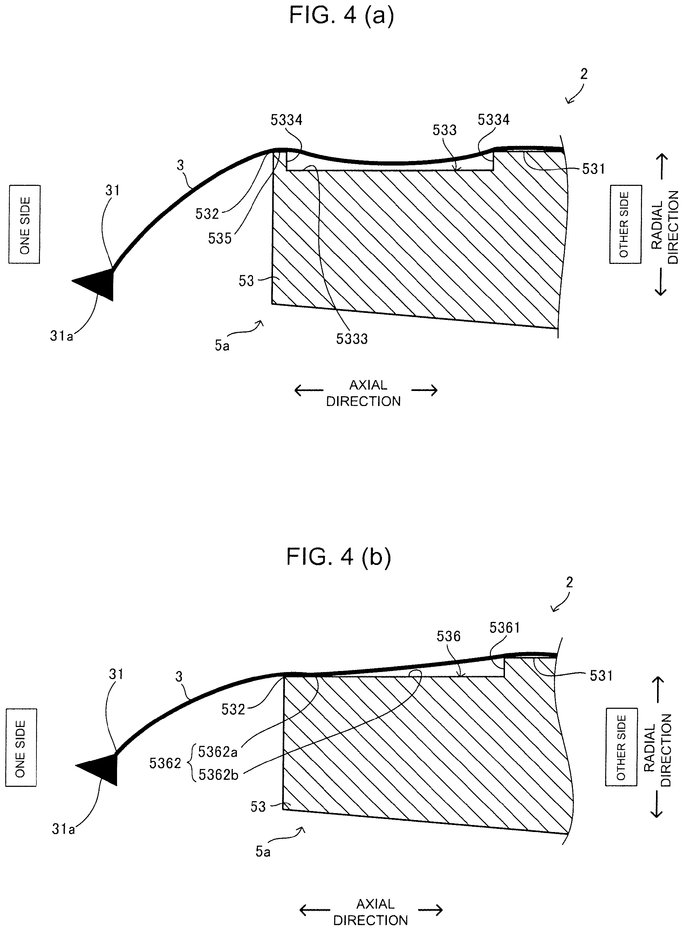

Fig. 4(a) is a schematic diagram illustrating a portion corresponding to Fig. 3(b) of the saw wheel unit according to a first modified example.

As illustrated in Fig 4(a), the saw wheel unit 2 according the first modified example differs from the above-described embodiment mainly in the configuration of the first groove 533 in a saw wheel 5 and a configuration of a portion corresponding to the contact surface referred to in the present invention. The first groove 533 according to the first modified example includes a first groove bottom portion 5333, and a pair of first groove wall portions 5334 respectively standing at both end portions of the first groove bottom portion 5333 in the axial direction. Note that a connecting portion between the first groove bottom portion 5333 and the first groove wall portion 5334 may be arc-shaped. In the upper saw wheel 5a according to the first modified example, a distance from the supporting surface 531 to the first groove bottom portion 5333 in the radial direction corresponds to a depth of a first groove referred to in the present invention. Further, the rim portion 53 includes a contact surface 535 extending in the axial direction between the edge 532 and the first groove 533.

As illustrated in Fig. 4(a), a band saw 3 wound around the upper saw wheel 5a contacts the edge 532 and the contact surface 535 by application of predetermined tensile force. On the other hand, the band saw 3 does not contact the first groove 533. In other words, according to the first modified example, the first groove 533 corresponds to the non-contact area referred to in the present invention.

According to the first modified example also, the first groove 533 which is the non-contact areas is provided, and therefore, contact pressure between the band saw 3 and the edge 532 is strengthened. This also strengthens tensile force of the teeth edge portion 31, and saw deviation can be prevented from occurring. Additionally, since the band saw 3 also contacts the contact surface 535, the contact pressure between the edge 532 and the band saw 3 does not become excessively strong, and therefore, a blade bottom of the saw teeth 31a can be prevented from being cracked. Meanwhile, the upper saw wheel 5a according to the first modified example may include a slope continuous to the contact surface 535 and inclined in a direction away from a rotary shaft of the upper saw wheel 5a as approaching to the contact surface 535, instead of the first groove bottom portion 5333.

Fig. 4(b) is a schematic diagram illustrating a portion corresponding to Fig. 3(b) of the saw wheel unit according to a second modified example.

As illustrated in Fig 4(b), the saw wheel unit 2 according to the second modified example mainly differs from the above-described embodiment in a point of including a notch 536 instead of the first groove 533. The notch 536 includes a notch wall portion 5361 and a notch bottom portion 5362. The notch wall portion 5361 extends in the radial direction from an end portion on one side of the supporting surface 531 in the axial direction to a rotary shaft of an upper saw wheel 5a. Note that the notch wall portion 5361 may be inclined in the radial direction. The notch bottom portion 5362 extends in substantially parallel to the axial direction from an end portion on a bottom side of the notch wall portion 5361 to the edge 532. Note that a connecting portion between the notch wall portion 5361 and the notch bottom portion 5362 may be arc-shaped. The edge 532 is positioned more on the rotary shaft side than the supporting surface 531 in the radial direction by the length of the notch wall portion 5361 in the radial direction. Meanwhile, the edge 532 may also be positioned between a position closer to the rotary shaft side than the supporting surface 531 by the length of the notch wall portion 5361 in the radial direction and a position same as the supporting surface 531 in the radial direction. According to the second modified example, a distance from the notch bottom portion 5362 to the supporting surface 531 in the radial direction corresponds to the depth of the notch referred to in the present invention. Further, a length of the notch 536 in the axial direction corresponds to the width of the notch 536.

As illustrated in Fig. 4(b), a band saw 3 according to the second modified example, wound around the upper saw wheel 5a and applied with predetermined tensile force contacts the edge 532, and also contacts a notch first portion 5362a on one side of the notch bottom portion 5362 in the axial direction. On the other hand, the band saw 3 does not contact a notch second portion 5362b which is more on the other side of the notch bottom portion 5362 in the axial direction than the notch first portion 5362a, and also does not contact the notch wall portion 5361. In other words, according to the second modified example, the notch first portion 5362a corresponds to the contact surface referred to in the present invention, and the notch second portion 5362b and the notch wall portion 5361 correspond to non-contact areas referred to in the present invention.

According to the second modified example, the notch second portion 5362b and the notch wall portion 5361 which are the non-contact areas are provided, and therefore, contact pressure between the band saw 3 and the edge 532 is strengthened. This also strengthens tensile force of a teeth edge portion 31, and saw deviation can be prevented from occurring. Additionally, since the band saw 3 also contacts the notch first portion 5362a, the contact pressure between the edge 532 and the band saw 3 does not become excessively strong, and therefore, a blade bottom of the saw teeth 31a can be prevented from being cracked.

Here, according to a second alternative of the invention, the width of the notch 536 is set to 14 times or more and 23 times or less of thickness of the band saw 3 and a depth of the notch 536 is set to 3/1000 or more and 20/1000 or less of the thickness of the band saw 3 in order to apply appropriate tensile force to the teeth edge portion 31. Further, in the case where the thickness of the band saw 3 is, for example, approximately 1.20 mm, preferably the width of the notch 536 is set to 17 mm or more and 27 mm or less and the depth of the notch 536 is set to 0.01 mm or more and 0.02 mm or less.

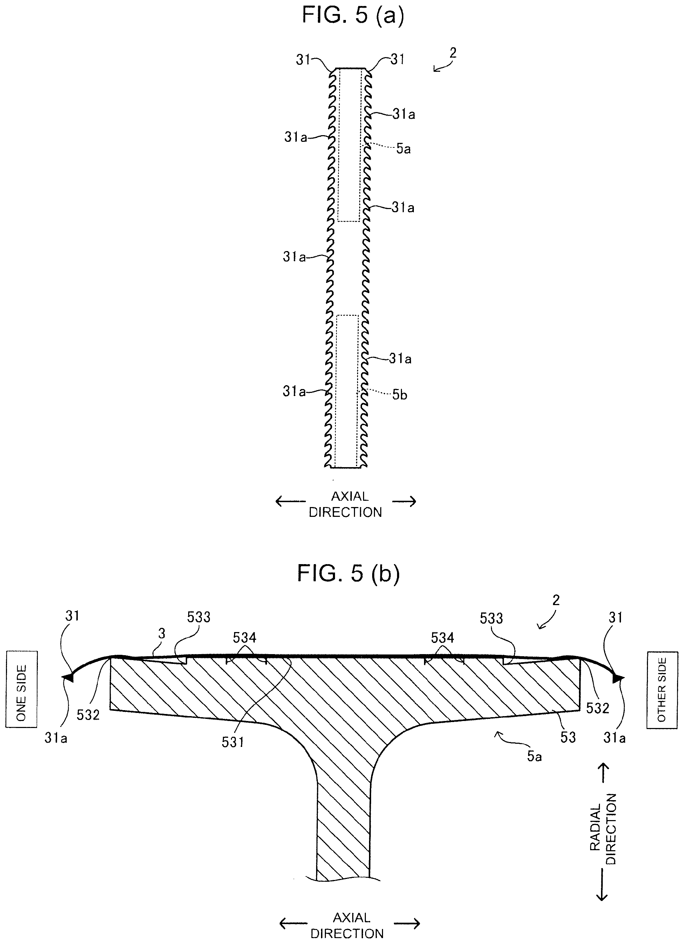

Fig. 5 (a) is a schematic diagram illustrating a mode corresponding to Fig. 2(b) of the saw wheel unit according to a third modified example, and Fig. 5(b) is a schematic diagram illustrating a portion corresponding to Fig. 3(a) of the saw wheel unit according to the third modified example.

As illustrated in Figs. 5(a) and 5(b), in the saw wheel unit 2 according to the third modified example, the band saw 3 includes the teeth edge portion 31 provided along each of both edges on one side and the other side in the axial direction. An upper saw wheel 5a includes the edge 532 provided at the end portion on the one side in the axial direction and the edge 532 provided at the end portion on the other side in the axial direction. Further, the first groove 533 is provided between the supporting surface 531 and each of the edges 532. Two second grooves 534 are provided in each of a portion close to the one side and a portion close to the other side on the supporting surface 531.
As illustrated in Fig. 5(a), the saw wheel unit 2 according to the third modified example is wound around each of the upper saw wheel 5a and lower saw wheel 5b while having the teeth edge portion 31 on the one side and the teeth edge portion 31 on the other side respectively projected in the axial direction. The saw wheel unit 2 according to the third modified example can cut lumber that travels from both directions when the lumber travels from the one side to the other side (rightward in the drawing) and when the lumber travels from the other side to the one side (leftward in the drawing) in the axial direction.

According to the saw wheel unit 2 of the third modified example, the upper saw wheel 5a includes the first grooves 533 on the one side and the other side respectively, and therefore, the tensile force at the respective teeth edge portions 31 on the one side and the other side can be strengthened. As a result, saw deviation can be prevented from occurring in the both cases where the lumber travels from the one side to the other side and travels from the other side to the one side in the axial direction.

Meanwhile, according to the saw wheel unit 2 of the third modified example, the first groove 533 of the first modified example illustrated in Fig. 4(a) or the notch 536 of the second modified example illustrated in Fig. 4(b) may be provided instead of the first groove 533.

Next, results obtained from executing lumber sawing experiments by using the saw wheel units according to a working example 1 and a working example 2 of the present invention will be described together with a comparative example 1 and a comparative example 2.

In the working example 1, the saw wheel according to the embodiment illustrated in Fig. 3 is used. The first groove is set to have the width of 23 mm and the depth of 0.013 mm, and the second groove is set to have the width of 3 mm and the depth of 0.015 mm. In the working example 2, the saw wheel according to a modified example 2 illustrated in Fig. 4(b) is used. The notch is set to have the width of 23 mm and the depth of 0.013 mm, and the second groove is set to have the width of 3 mm and the depth of 0.015 mm. In a working example 3, the saw wheel of the working example 1 which does not include the second groove is used. In a working example 4, the saw wheel of the working example 2 which does not include the second groove is used. In the comparative example 1, the saw wheel of the working example 1 which does not include the first groove is used. In the comparative example 2, the saw wheel of the working example 1 which includes neither the first groove nor the second groove is used. Further, these saw wheels are set to have the length of 165 mm in the axial direction.

In all of the working examples 1 to 4 and the comparative examples 1 and 2, the band saw having the width of 7 inch (177.8 mm), thickness of 1.20 mm, blade edge pitch of 27 mm, and amount of the back crown of 0.15 mm. Here, saw base material is cut by a machining center such that the amount of back crown becomes 0.15 mm, and jointed endlessly. A radius of curvature of a back edge portion is 374.8 m at this point. Note that neither tensioning processing nor back crown processing have been applied to the saw base material. As the band saw machine, a band saw machine of model No. OSS1200mm manufactured by Oi Seisakusho Co., Ltd. is used, and the upper saw wheel and the lower saw wheel are set at the band saw machine, and further, 4 tons of tensile force is applied to the band saws around which the upper saw wheel and the lower saw wheel are wound around. Study is made on whether saw deviation occurs when the lumber is cut by setting the saw rim speed to 3200 m/min, the sawing width to 200 mm, and classifying the carriage speed into five levels: 43.5 m/min, 48.3 m/min, 53.0 m/min, 67.3 m/min, and 81.6 m/min. As the lumber, Cryptomeria japonica is used. Occurrence of saw deviation is determined by putting a straight edge ruler on remaining material in the length direction after having cut the lumber to check whether resulting in being straight or not (whether any clearance exists or not). In the case of resulting in being straight, it is determined ○, in the case of having a curve within 0.3 mm, it is determined Δ, and in the case of having the curve larger than 0.3 mm, it is determined ×.

The results of the sawing experiments are shown in Table 1 below.

**[Table 1]**

| | CARRIAGE SPEED (m/min) | | | | |
|---|---|---|---|---|---|
| | 43.5 | 48.3 | 53.0 | 67.3 | 81.6 |
| WORKING EXAMPLE 1 (1ST GROOVE, 2ND GROOVE) | ○ | ○ | ○ | ○ | ○ |
| WORKING EXAMPLE 2 (NOTCH, 2ND GROOVE) | ○ | ○ | ○ | ○ | ○ |
| WORKING EXAMPLE 3 (1ST GROOVE) | ○ | ○ | ○ | ○ | Δ |
| WORKING EXAMPLE 4 (NOTCH) | ○ | ○ | ○ | ○ | Δ |
| COMPARATIVE EXAMPLE 1 (2ND GROOVE) | ○ | ○ | ○ | ○ | × |
| COMPARATIVE EXAMPLE 2 (NONE) | × | × | × | × | × |

As shown in Table 1, in the working example 1 where the first groove and second groove are provided and in the working example 2 where the notch and the second groove are provided, it is clear that occurrence of saw deviation is not observed in all levels of the carriage speeds from 43.5 m/min to 81.6 m/min and saw deviation hardly occurs. In the working example 3 where the first groove is provided and in the working example 4 where the notch is provided, it is clear that occurrence of saw deviation is not observed at the carriage speeds from 43.5 m/min to 67.3 m/min and saw deviation is suppressed from occurring although occurrence of saw deviation of 0.3 mm or less is observed at the carriage speed of 81.6 m/min. On the other hand, in the comparative example 1 where the second groove is provided, occurrence of saw deviation is not observed at the carriage speeds from 43.5 m/min to 67.3 m/min but occurrence of saw deviation causing curve larger than 0.3 mm is observed at the carriage speed of 81.6 m/min. Further, in the comparative example 2 where none of the first groove, notch, and second groove is provided, saw deviation causing the curve larger than 0.3 mm occurs in the all levels of the carriage speeds from 43.5 m/min to 81.6 m/min.

Judging from above, it can be understood that when the first groove or notch is provided, saw deviation hardly occurs even when the carriage speed is set high.

According to the saw wheels 5a, 5b and the saw wheel unit 2 where the present invention is adopted, saw deviation can be prevented without necessity of applying the tensioning processing to the band saw 3.

The present invention is not limited to the above-described embodiment, and various changes may be made without departing from the scope of the claims. For instance, according to the present embodiment, a saw wheel 5 includes a second groove 534 together with the first groove 533 or the notch 536; however, the saw wheel 5 may not include the second groove 534 but may include the first groove 533 or the notch 536. Additionally, according to the present embodiment, the saw wheel unit 2 is used for the so-called twin type band saw machine 1 including the two sets of the saw wheel units. Further, the saw wheel unit 2 including the upper saw wheel 5a and lower saw wheel 5b is set in the vertical band saw machine 1; however, the saw wheel unit wherein a pair of saw wheels 5 is horizontally disposed may be set in a horizontal band saw machine. Furthermore, according to the present embodiment, the band saw 3 is wound around the saw wheel 5 such that the back edge portion 32 is positioned slightly more inner side than an edge of the saw wheel 5 in the axial direction; however, the band saw 3 may be wound around the saw wheel 5 such that the back edge portion 32 is aligned with the edge of the saw wheel 5 or positioned more projected than the edge of the saw wheel 5.

### Reference Signs List

- 1: Band saw machine
- 2: Saw wheel unit
- 3: Band saw
- 31: Teeth edge portion
- 31a: Saw teeth
- 32: Back edge portion
- 5: Upper saw wheel
- 5b: Low saw wheel
- 53: Rim portion
- 531: Supporting surface
- 532: Edge
- 533: First groove
- 5331: Wall portion
- 5332: Slope
- 5332a: First portion
- 5332b: Second portion
- 534: Second groove
- 5341: Second groove bottom portion
- 5342: Second groove wall portion
- 536: Notch
- 5361: Notch wall portion
- 5362: Notch bottom portion
- 5362a: Notch first portion
- 5362b: Notch second side portion

## Claims

1. A band saw machine comprising a band saw (3) and a pair of saw wheels (5a, 5b), wherein the band saw (3) is wound around the pair of saw wheels(5a, 5b) disposed spaced apart, the band saw (3) including a teeth edge portion(31) formed of a plurality of saw teeth (31a) laying side-by-side in a circumferential direction, wherein each of the saw wheels (5a, 5b) includes, at an outer periphery, a rim portion (53) around which the band saw (3) is wound, and rotates around a rotary shaft extending in a thickness direction, wherein the rim portion (53) includes:
a supporting surface (531) configured to support the band saw (3);
an edge (532) provided at an end portion on at least one side of the rim portion in an axial direction of the rotary shaft, and configured to be contacted by the band saw in a state where the teeth edge portion (31) is projected from the end portion;
a non-contact area (5332b, 5333, 5334, 5362b, 5361, 5331) disposed between the supporting surface (531) and the edge (532), and configured not to contact the band saw (3);
a contact surface (5332a, 535, 5362a) disposed between the edge(532) and the non-contact area (5332b, 5333, 5334, 5362b, 5361, 5331) and configured to be contacted by the band saw(3), **characterized in that** the rim portion (53) includes either a first groove (533) or, alternatively, a notch (536), wherein one of the following options applies:
• the rim portion (53) includes the first groove (533) provided at an end portion on the one side and extending in a circumferential direction,
the non-contact area (5332b, 5331)and the contact surface (5332a) are disposed at predetermined positions of the first groove (533), and
the first groove (533) has a width which is 14 times or more and 23 times or less of a thickness of the band saw (3), and a depth which is 3/1000 or more and 20/1000 or less of the thickness of the band saw (3), or
• the rim portion (53) includes the notch (536) formed by cutting out an end portion on the one side in a circumferential direction,
the non-contact area (5362b, 5361) and the contact surface (5362a) are provided at predetermined positions of the notch (536), and
the notch (536) has a length which is 14 times or more and 23 times or less of a thickness of the band saw in the axial direction, and a depth which is 3/1000 or more and 20/1000 or less of the thickness of the band saw (3).

2. The band saw machine according to claim 1, **characterized in that** the supporting surface (531) includes a plurality of second grooves (534) arranged at intervals in the axial direction and extending in the circumferential direction.

3. The band saw machine according to claim 2, **characterized in that** the second groove (534) has a depth which is 3/1000 or more and 20/1000 or less of a thickness of the band saw (3), and a width which is 150 times or more and 250 times or less of the depth of the band saw (3).

## Patentansprüche

1. Bandsägemaschine mit einer Bandsäge (3) und einem Paar Sägerädern (5a, 5b), wobei die Bandsäge (3) um das Paar voneinander beabstandet angeordneter Sägeräder (5a, 5b) gewickelt ist, wobei die Bandsäge (3) einen Zahnkantenabschnitt (31) aufweist, der aus einer Vielzahl von Sägezähnen (31a) gebildet ist, die in einer Umfangsrichtung Seite an Seite liegen, wobei jedes der Sägeräder (5a, 5b) an einem äußeren Umfang einen Randabschnitt (53) beinhaltet, um den die Bandsäge (3) gewickelt ist, und sich um eine Drehachse dreht, die sich in einer Dickenrichtung erstreckt, wobei der Randabschnitt (53) Folgendes beinhaltet:
eine Stützfläche (531), die konfiguriert ist, um die Bandsäge (3) zu tragen;
eine Kante (532), die an einem Endabschnitt auf mindestens einer Seite des Randabschnitts in einer axialen Richtung der Drehachse vorgesehen ist und konfiguriert ist, um von der Bandsäge in einem Zustand kontaktiert zu werden, in dem der Zahnkantenabschnitt (31) von dem Endabschnitt vorsteht;
einen Kontaktlos-Bereich (5332b, 5333, 5334, 5362b, 5361, 5331), der zwischen der Stützfläche (531) und der Kante (532) angeordnet ist und konfiguriert ist, die Bandsäge (3) nicht zu berühren;
eine Kontaktfläche (5332a, 535, 5362a), die zwischen der Kante (532) und dem Kontaktlos-Bereich (5332b, 5333, 5334, 5362b, 5361, 5331) angeordnet und konfiguriert ist, um von der Bandsäge (3) kontaktiert zu werden,
**dadurch gekennzeichnet, dass**
der Randabschnitt (53) entweder eine erste Nut (533) oder alternativ eine Kerbe (536) beinhaltet, wobei eine der folgenden Optionen gilt:
- der Randabschnitt (53) beinhaltet die erste Nut (533), die an einem Endabschnitt auf der einen Seite vorgesehen ist und sich in einer Umfangsrichtung erstreckt,
der Kontaktlos-Bereich (5332b, 5331) und die Kontaktfläche (5332a) an vorbestimmten Positionen der ersten Nut (533) angeordnet sind, und
die erste Nut (533) eine Breite aufweist, die 14 mal oder mehr und 23 mal oder weniger einer Dicke der Bandsäge (3) beträgt, und eine Tiefe, die 3/1000 oder mehr und 20/1000 oder weniger der Dicke der Bandsäge (3) beträgt, oder
- der Randabschnitt (53) beinhaltet die Kerbe (536), die durch Ausschneiden eines Endabschnitts auf der einen Seite in Umfangsrichtung gebildet ist,
der Kontaktlos-Bereich (5362b, 5361) und die Kontaktfläche (5362a) an vorbestimmten Positionen der Kerbe (536) vorgesehen sind, und
die Kerbe (536) eine Länge aufweist, die 14 mal oder mehr und 23 mal oder weniger einer Dicke der Bandsäge in axialer Richtung beträgt, und eine Tiefe, die 3/1000 oder mehr und 20/1000 oder weniger der Dicke der Bandsäge (3) beträgt.

2. Bandsägemaschine nach Anspruch 1, **dadurch gekennzeichnet, dass** die Auflagefläche (531) eine Vielzahl von zweiten Nuten (534) aufweist, die in Abständen in Axialrichtung angeordnet sind und sich in Umfangsrichtung erstrecken.

3. Bandsägemaschine nach Anspruch 2, **dadurch gekennzeichnet, dass** die zweite Nut (534) eine Tiefe von 3/1000 oder mehr und 20/1000 oder weniger einer Dicke der Bandsäge (3) und eine Breite von 150 mal oder mehr und 250 mal oder weniger der Tiefe der Bandsäge (3) aufweist.

## Revendications

1. Machine de scie à ruban comprenant une scie à ruban (3) et une paire de lames de scie (5a, 5b), dans laquelle la scie à ruban (3) est enroulée autour de la paire de lames de scie (5a, 5b) qui sont disposées selon un certain espacement l'une par rapport à l'autre, la scie à ruban (3) incluant une section de bord porteuse de dents (31) qui est formée par une pluralité de dents de scie (31a) qui s'étendent côte à côte dans une direction circonférentielle, dans laquelle chacune des lames de scie (5a, 5b) inclut, au niveau d'une périphérie externe, une section de rebord (53) autour de laquelle la lame de scie (3) est enroulée, et tourne autour d'un arbre rotatif qui s'étend dans une direction d'épaisseur, dans laquelle la section de rebord (53) inclut :
une surface de support (531) qui est configurée de manière à ce qu'elle supporte la scie à ruban (3) ;
un bord (532) qui est prévu au niveau d'une section d'extrémité sur au moins un côté de la section de rebord dans une direction axiale de l'arbre rotatif et qui est configuré de manière à ce que la scie à ruban entre en contact avec dans un état dans lequel la section de bord porteuse de dents (31) fait saillie depuis la section d'extrémité ;
une zone de non contact (5332b, 5333, 5334, 5362b, 5361, 5331) qui est disposée entre la surface de support (531) et le bord (532) et qui est configurée de manière à ce qu'elle n'entre pas en contact avec la scie à ruban (3) ;
une surface de contact (5332a, 535, 5362a) qui est disposée entre le bord (532) et la zone de non contact (5332b, 5333, 5334, 5362b, 5361, 5331) et qui est configurée de manière à ce que la scie à ruban (3) entre en contact avec ;
**caractérisée en ce que** :
la section de rebord (53) inclut soit une première gorge (533), soit, à titre d'alternative, une encoche (536), dans laquelle l'une des options qui suivent s'applique :
• la section de rebord (53) inclut la première gorge (533) qui est prévue au niveau d'une section d'extrémité sur le côté considéré et qui s'étend dans une direction circonférentielle ;
la zone de non contact (5332b, 5331) et la surface de contact (5332a) sont disposées en des positions prédéterminées de la première gorge (533) ; et
la première gorge (533) présente une largeur qui est égale à 14 fois ou plus et à 23 fois ou moins une épaisseur de la scie à ruban (3) et une profondeur qui est égale aux 3/1000èmes ou plus et aux 20/1000èmes ou moins de l'épaisseur de la scie à ruban (3) ; ou
• la section de rebord (53) inclut l'encoche (536) qui est formée en découpant une section d'extrémité sur le côté considéré dans une direction circonférentielle ;
la zone de non contact (5362b, 5361) et la surface de contact (5362a) sont prévues en des positions prédéterminées de l'encoche (536) ; et
l'encoche (536) présente une longueur qui est égale à 14 fois ou plus et à 23 fois ou moins une épaisseur de la scie à ruban dans la direction axiale et une profondeur qui est égale aux 3/1000èmes ou plus et aux 20/1000èmes ou moins de l'épaisseur de la scie à ruban (3).

2. Machine de scie à ruban selon la revendication 1, **caractérisée en ce que** la surface de support (531) inclut une pluralité de secondes gorges (534) qui sont agencées selon des intervalles dans la direction axiale et qui s'étendent dans la direction circonférentielle.

3. Machine de scie à ruban selon la revendication 2, **caractérisée en ce que** la seconde gorge (534) présente une profondeur qui est égale aux 3/1000èmes ou plus et aux 20/1000èmes ou moins d'une épaisseur de la scie à ruban (3) et une largeur qui est égale à 150 fois ou plus et à 250 fois ou moins la profondeur de la scie à ruban (3).
